# EUROPEAN PATENT SPECIFICATION

(11) **EP 1 304 523 B1**
(45) Date of publication and mention of the grant of the patent: **21.07.2010**
(21) Application number: 02023027.2
(22) Date of filing: 16.10.2002
(51) Int. Cl.: F17C 3/00, F17C 13/00, F17C 3/12, F17C 13/12

(54) **Device for treating installations of underground tanks and piping**
Vorrichtung zur Behandlung von unterirdischen Behälter- und Rohrnetzanlagen
Dispositif de traitement d'installations de réservoirs enterrés et de réseau de canalisations

(30) Priority: 18.10.2001 IT MN20010042
(43) Date of publication of application: 23.04.2003
(73) Proprietor: MI.PI S.r.l., 16121 Genova (IT); Water And Soil Remediation S.r.l., 46010 Curtatone (Mantova) (IT)
(72) Inventor: Pizzorni, Domenico, 16100 Genova (IT); Prandi, Alberto, 46100 Mantova (IT)
(74) Representative: Modiano, Micaela Nadia

(56) References cited:
- EP-A- 0 712 793
- EP-A- 0 831 078
- GB-A- 2 215 023
- US-A- 4 079 689
- US-A- 4 521 517
- US-A1- 2001 002 969
- US-B1- 6 383 803
- PATENT ABSTRACTS OF JAPAN vol. 1999, no. 11, 30 September 1999 (1999-09-30) & JP 11 148456 A (EBARA CORP), 2 June 1999 (1999-06-02)

## Description

The present invention relates to a device for treating installations of underground tanks and piping.

It is known that installations of underground tanks designed to contain pollutants, such as for example hydrocarbons, haven a severe problem constituted by the danger of corrosion of their walls, consequently introducing said pollutants in the surrounding soil.

In order to improve on technologies that offer partial approaches that are not entirely satisfactory regarding the three key aspects constituted by reclamation of the soil that surrounds the tanks to remove any pollutants that are present therein, by the need to provide effective protection of the tanks, and finally by the need to perform continuous monitoring of the soil in order to report any leaks when they occur, a device has been proposed which comprises a plurality of probes, which are driven into the grounds and connected to a control unit provided with means for creating a stream of dried air and are arranged so as to force the stream generated by said probes to strike the walls of the tanks.

It should also be noted that on the same date these same Applicants have filed a patent application related to an underground tank for which it is necessary to create a current of fluid, for example dried air, that passes through an interspace with which the tank is provided.

EP 0 712 723 shows underground tank for storage and US 4 521 517 shows a compost aeration system using a blower.

Very often, underground tanks are arranged in batteries that comprise one or more closely spaced tanks, and therefore the aim of the present invention is to provide a device for managing the dried air, or any other fluid used, both in the presence of probes driven into the soil and if said probes are not present and only tanks of the type disclosed in the patent application filed on the same date are provided, said device being constructively very simple and offering the possibility to provide, even automatically and remotely, a plurality of different functional conditions suitable to meet any possible requirement.

The proposed aim is achieved by a device for treating installations of underground tanks and piping, according to the invention, characterized in that it comprises:
-- a blower, which is suitable to determine a current of fluid and has intake and delivery lines that comprise means for sensing characteristics of the stream;
-- two manifolds, which are connected at one end to the delivery line and at the other end to the intake line of the blower by way of connectors provided with electric valves for flow control and have a plurality of branches, each provided with an electric valve for flow control and suitable to be connected to a user device.

Further characteristics and advantages will become better apparent from the description of some preferred but not exclusive embodiments of the invention, illustrated only by way of non-limitative example in the accompanying drawings, wherein:
Figure 1 is a schematic view of the invention;
Figure 2 is another schematic view of a different embodiment of the invention;
Figure 3 is a view of a detail of a type of probe driven into the soil according to a further embodiment.

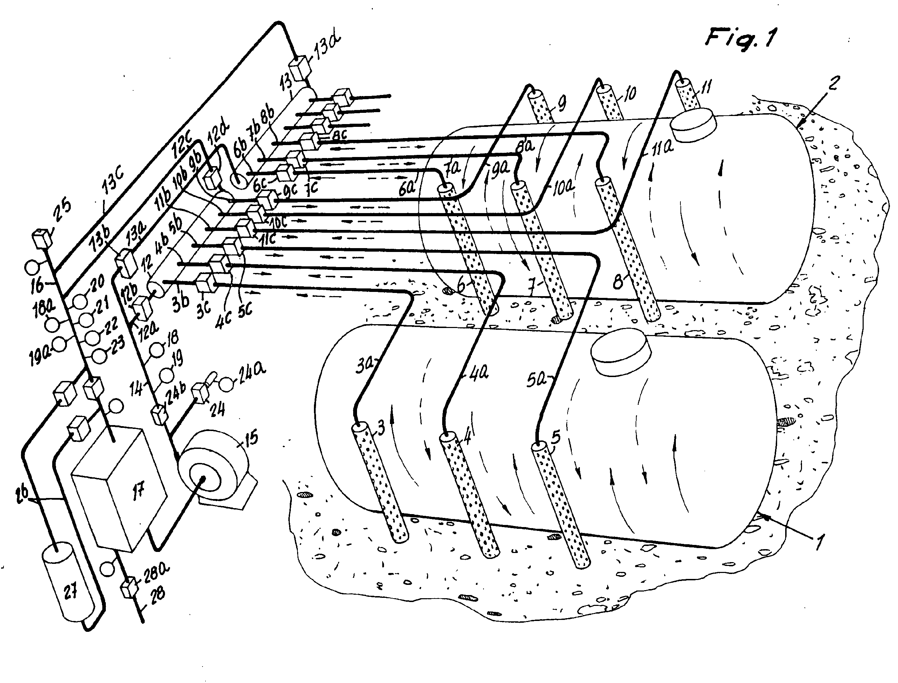

With reference to Figure 1, the reference numerals 1 and 2 designate two underground tanks, proximate to which probes are installed which are shaped like tubular monolithic bodies with a perforated wall, said probes being divided into three groups formed respectively by the probes 3, 4 and 5, by the probes 6, 7 and 8, and by the probes 9, 10 and 11.

The probes 3, 4 and 5 are connected by way of flexible hoses 3a, 4a, 5a to branches 3b, 4b and 5b that extend from a manifold 12 and are controlled by electric valves 3c, 4c and 5c.

The probes 6, 7 and 8 are connected by way of flexible hoses 6a, 7a, 8a to branches 6b, 7b and 8b that extend from a manifold 13 and are controlled by electric valves 6c, 7c and 8c.

The probes 9, 10 and 11 are connected by way of flexible hoses 9a, 10a, 11a to branches 9b, 10b and 11b that extend from the manifold 12 and are controlled by electric valves 9c, 10c and 11c.

The manifolds 12 and 13 are connected at one end, by way of connectors 12a, 13a controlled by electric valves 12b, 13b, to a delivery line 14 of a blower 15, which is suitable to produce a current of dehumidified air.

At the other end, said manifolds are connected by way of connectors 12c, 13c, controlled by electric valves 12d, 13d, to an intake line 16 of the blower 15, on which a dehumidifier 17 is interposed.

The delivery and intake lines of the blower 15 comprise means for sensing characteristics of the stream, and specifically the temperature measurement instruments 18, 18a and the humidity measurement instruments 19, 19a arranged respectively on the delivery and on the intake upstream of the dehumidifier 17, and a sensor 20 for organic vapors such as hydrocarbons, a pressure gauge 21, a flow meter 22 and a vacuum gauge 23, all arranged on the intake of the blower 15.

Furthermore, the reference numeral 24 designates an electric valve for venting into the atmosphere with a flow meter 24a that is arranged on the delivery line of the blower 15 and acts in combination with an electric valve for flow control/throttling 24b arranged downstream and described hereafter; furthermore, an electric valve 25 is provided on the intake line of the blower and upstream of the organic vapor sensor 20 and is suitable to allow only external air to access said line, in order to allow zero calibration of said sensor.

On a bypass line 26 that branches off from the intake line 16 of the blower 15 there is an activated-charcoal filter 27 for reducing any organic vapors that are present in the air aspirated from the soil, and finally the reference numeral 28 designates a line for drawing external air that is controlled by an electric valve 28a.

A PLC controls all the functions of the system, which are now described in general terms, and can be provided with means suitable to send the recorded data to remote stations, in order to allow optional commands from said stations; by way of the considerable instrument set described, it is possible to pursue in an optimum manner the intended triple goal: reclamation of the soil, protection of the tanks, and continuous monitoring of the situation.

When the electric valves 12b and 13d are open and the electric valves 12d and 13d are closed, a circulation of air in the direction indicated by the solid arrows is established in the device and in the soil: the air is introduced in the soil by way of the probes 3, 4 and 5 and the probes 9, 10 and 11, strikes the tanks, and is aspirated by means of the probes 6, 7 and 8; substantially, the manifold 12 acts as a delivery manifold and the manifold 13 acts as an intake manifold.

According to intervals that are programmed in order to optimize the operation of the device, i.e., to unclog blocked intake probes with air circulation problems reported by the flow meter 22 and the vacuum gauge 23, the direction of the stream of the air is easily reversed, bringing it to the situation shown by the dashed-line arrows.

For this purpose it is sufficient to close the electric valves 12b and 13d and open the electric valves 12d and 13b, and the air is thus sent into the soil by means of the probes 6, 7 and 8 and is aspirated, after affecting the tanks, by way of the probes 3, 4 and 5 and the probes 9, 10 and 11; the manifold 13 therefore acts as a delivery manifold and the manifold 12 acts as an intake manifold.

Another important function allowed by the device according to the invention is the possibility to determine a circulation of air only in delimited regions of the soil, by acting on the electric valves provided on the individual branches of the manifolds, such as for example 3c on the branch 3b, and this is done essentially for two purposes.

A first purpose is to optimize the search for leaks of substances which, like Diesel fuel, release limited quantities of vapor; the throttling of the air stream in limited regions of the soil increases the sensitivity of the sensing of the device and therefore a programmed alternation of the opening of individual groups of electric valves is provided while keeping the other electric valves closed.

Another purpose is to locate the exact site of a leak sensed by the instruments: it is sufficient to circulate air gradually in delimited regions of the soil until the region where the leak is sited is detected.

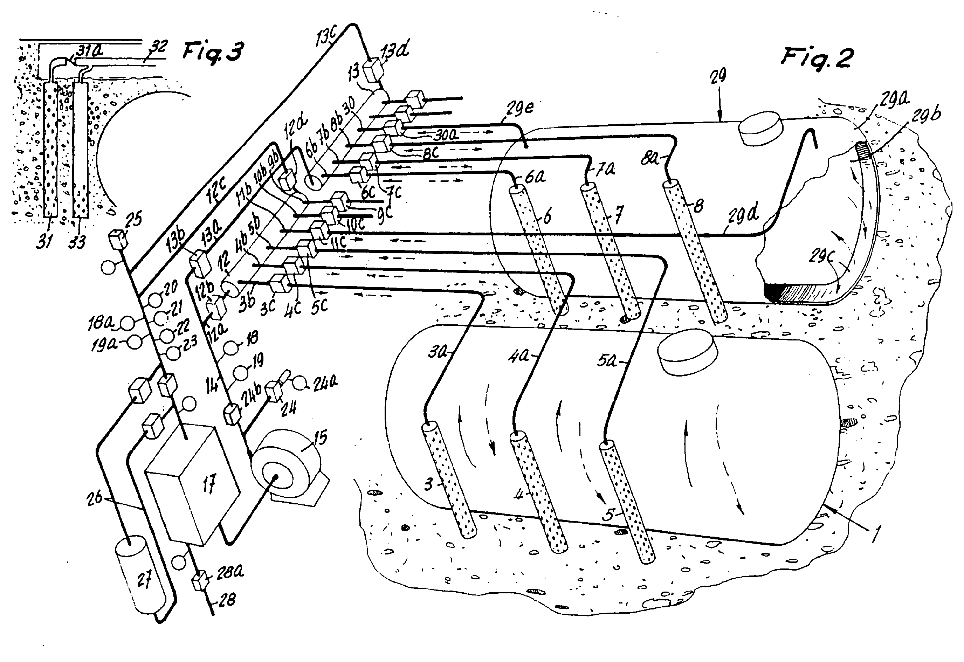

The embodiment of the invention shown in Figure 2 entails replacing the tank 2 of Figure 1 with a tank 29 of the type to which the patent application filed on the same date by the same Applicants relates; accordingly, said tank is provided with a double wall 29a and 29b, forming an interspace 29c in which a current of dehumidified air is conveyed.

This battery of tanks might be the result of installation from scratch, but realistically it can be seen as an intermediate step of a process for complete renovation of the battery of tanks of Figure 1, both meant to be eliminated in order to make way for two tanks such as 29.

Attention is drawn to the fact that the replacement of the tank 2 with the tank 29 has occurred without having to modify in any way the device in its main parts, which are constituted by the blower with its own intake and delivery lines up to the manifolds 12 and 13.

Since the probes 9, 10 and 11 are omitted, the lines 9c, 10c and 11c have been eliminated; the lines 29d, 29e have instead been provided which branch out from the interspace 29c and are connected respectively to the branch 11b of the manifold 12 and to the branch 30, controlled by an electric valve 30a, of the manifold 13.

A single clarification related to operation should be added to what has been described with reference to Figure 1.

The device can operate continuously with all the lines active, as occurs in the case of Figure 2, which illustrates, by way of the arrows, the circulation of air both by means of the probes and in the interspace of the tank, only in the case in which introduction of pressurized air is allowed in said interspace as well.

If instead only the feeding of air under slight negative pressure into the interspace of the tank 29 is allowed, it is necessary to close periodically the lines connected to the probes, keeping open only the electric valves 11c, 30a related to the lines 29d, 29e and simultaneously activate the venting valve 24, which is appropriately regulated by the instruments: in this manner, all the functions of the device are ensured.

It almost goes without saying that the device described in the parts related to the blower with the intake and delivery lines up to and including the manifolds does not change in any way even if the tank 1 with the corresponding external probes is removed and replaced with a tank such as 29; therefore, even a battery of tanks all of the double-walled type is served perfectly by the described device.

Figure 3 illustrates a different embodiment of the probes driven into the soil with respect to the embodiment shown in Figures 1 and 2.

Such embodiment comprises the tubular body 31, which is perforated along its entire length and is connected to the air conveyance line 32 with the interposition of the one-way valve 31a, which is designed to open in the condition for delivering air from the line 32 and closes in the intake configuration, only the tubular body 33 remaining active, said tubular body 33 being also connected to the line 32, being perforated only at the end and being therefore particularly effective.

The described invention is susceptible of numerous other modifications and variations, all of which are within the scope of the inventive concept; thus, for example, the number of branches of the manifolds may be any in proportion to the number of tanks that constitute the battery to be treated.

Furthermore, the blower can generate a current of air that is not dehumidified, or of other substances, such as for example nitrogen.

The disclosures in Italian Patent Application No. MN2001A000042, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for treating installations of underground tanks (1, 2) and piping, **characterized in that** it comprises:
- - a blower (15), which is suitable to determine a current of fluid and has intake (16) and delivery (14) lines that comprise means for sensing characteristics (18, 18a, 19, 19a, 20, 21, 22, 23) of the stream;
- - two manifolds (12, 13), which are connected at one end to the delivery line and at the other end to the intake line of the blower by way of connectors (12c, 13c) provided with electric valves (12d, 13d) for flow control and have a plurality of branches (3b - 11b), each provided with an electric valve (3c - 11c) for flow control and suitable to be connected to a user device.

2. The device according to claim 1, **characterized in that** the fluid is air.

3. The device according to claim 1, **characterized in that** the fluid is dehumidified air, since a dehumidifier (17) is arranged on the intake line of the blower.

4. The device according to claim 1, **characterized in that** the fluid is nitrogen.

5. The device according to one or more of the preceding claims, **characterized in that** the branches of the manifolds are connected to the user devices by way of flexible hoses.

6. The device according to claim 5, **characterized in that** each user device comprises a perforated probe that is driven into the soil.

7. The device according to claims 5 or 6, **characterized in that** each user device comprises the interspace of a double-walled tank.

8. The device according to claims 5-7, **characterized in that** the user devices partly comprise perforated probes driven into the soil and partly comprise interspaces of double-walled tanks.

9. The device according to one or more of the preceding claims, **characterized in that** a probe driven into the soil comprises a tubular monolithic body with a perforated wall, provided at one end with a coupling to an air conveyance pipe.

10. The device according to one or more of the preceding claims, **characterized in that** a probe driven into the soil comprises two tubular bodies that have, at one end, a coupling to a same air conveyance pipe, one of said bodies being perforated along its entire length and being provided, at the coupling, with a one-way valve that is open in the condition for the exit of air from the probe, while the other body is perforated only at the end that lies opposite the coupling and has no valve.

11. The device according to one or more of the preceding claims, **characterized by** the presence of an activated-charcoal filter inserted on a bypass line controlled by electric valves and branched from the blower intake line.

12. The device according to claim 3 and one or more of the preceding claims, **characterized by** the presence of a line for drawing external air that is controlled by an electric valve and is inserted at the dehumidifier.

13. The device according to claim 3 and one or more of the preceding claims, **characterized in that** the means for sensing characteristics of the stream comprise instruments for measuring temperature and humidity, which are arranged respectively on the delivery line and on the intake line of the blower upstream of the dehumidifier.

14. The device according to one or more of the preceding claims, **characterized in that** the means for sensing characteristics of the stream comprise at least one organic vapor sensor that is arranged on the intake line of the blower.

15. The device according to one or more of the preceding claims, **characterized in that** the means for sensing characteristics of the stream comprise a pressure gauge that is arranged on the intake line of the blower.

16. The device according to one or more of the preceding claims, **characterized in that** the means for sensing characteristics of the stream comprise a flow meter and a vacuum gauge arranged on the intake line of the blower.

17. The device according to claim 16, **characterized by** the presence of an electric valve for atmospheric venting, which is provided with a flow meter, is arranged on the delivery line of the blower and is controlled by the vacuum sensor in order to adjust the negative pressure within the interspace of at least one double-walled tank, and acting in combination with a flow control/throttling electric valve arranged on said delivery line downstream of said venting electric valve.

18. The device according to claim 14 and one or more of the preceding claims, **characterized by** the presence of an electric valve arranged on the intake line of the blower upstream of the organic vapor sensor and suitable to allow only external air to access to said line in order to provide the calibration of said sensor.

19. The device according to one or more of the preceding claims, **characterized by** the presence of a PLC for controlling all the functions.

20. The device according to one or more of the preceding claims, **characterized in that** it comprises means for communicating with remote stations which are suitable to transmit sensed data and any commands.

## Patentansprüche

1. Eine Vorrichtung zur Behandlung von unterirdischen Behälter-(1, 2) und Rohrnetzanlagen, **dadurch gekennzeichnet, dass** sie Folgendes umfasst:
- ein Gebläse (15), das geeignet ist, einen Fluidstrom zu bestimmen, und Einlass-(16) und Ablass-Leitungen (14) hat, die Mittel zur Erfassung von Eigenschaften (18, 18a, 19, 19a, 20, 21, 22, 23) des Stroms umfassen,
- zwei Verteiler (12, 13), die durch Verbindungsstücke (12c, 13c), welche zur Durchflussregelung mit Elektroventilen (12d, 13d) ausgestattet sind, an einem Ende mit der Ablass-Leitung und am anderen Ende mit der Einlass-Leitung des Gebläses verbunden sind und eine Vielzahl von Verzweigungen (3b-11b) haben, die jeweils mit einem Elektroventil (3c-11c) zur Durchflussregelung ausgestattet sind und geeignet sind, mit einer Benutzervorrichtung verbunden zu werden.

2. Die Vorrichtung gemäß Anspruch 1, **dadurch gekennzeichnet, dass** das Fluid Luft ist.

3. Die Vorrichtung gemäß Anspruch 1, **dadurch gekennzeichnet, dass** das Fluid entfeuchtete Luft ist, da ein Entfeuchter (17) an der Einlass-Leitung des Gebläses angebracht ist.

4. Die Vorrichtung gemäß Anspruch 1, **dadurch gekennzeichnet, dass** das Fluid Stickstoff ist.

5. Die Vorrichtung gemäß einem oder mehreren der obigen Ansprüche, **dadurch gekennzeichnet, dass** die Verzweigungen der Verteiler mit den Benutzervorrichtungen durch Schläuche verbunden sind.

6. Die Vorrichtung gemäß Anspruch 5, **dadurch gekennzeichnet, dass** jede Benutzervorrichtung eine durchlöcherte Sonde umfasst, die in die Erde getrieben wird.

7. Die Vorrichtung gemäß Anspruche 5 oder 6, **dadurch gekennzeichnet, dass** jede Benutzervorrichtung den Zwischenraum eines doppelwandigen Behälters umfasst.

8. Die Vorrichtung gemäß Anspruch 5-7, **dadurch gekennzeichnet, dass** die Benutzervorrichtungen durchlöcherte Sonden teilweise umfassen, die in die Erde getrieben werden, und teilweise Zwischenräume von doppelwandigen Behältern umfassen.

9. Die Vorrichtung gemäß einem oder mehreren der obigen Ansprüche, **dadurch gekennzeichnet, dass** eine in die Erde getriebene Sonde einen rohrförmigen monolithischen Körper mit einer durchlöcherten Wand umfasst, der an einem Ende mit einer Kopplung mit einem Luftförderrohr versehen ist.

10. Die Vorrichtung gemäß einem oder mehreren der obigen Ansprüche, **dadurch gekennzeichnet, dass** eine in die Erde getriebene Sonde zwei rohrförmige Körper umfasst, die an einem Ende eine Kopplung mit einem selben Luftförderrohr haben, wobei einer der Körper über seine gesamte Länge durchlöchert und an der Kopplung mit einem Einwegventil ausgestattet ist, das im Zustand für den Austritt von Luft aus der Sonde offen ist, während der andere Körper nur an dem Ende durchlöchert ist, das gegenüber der Kopplung liegt, und kein Ventil hat.

11. Die Vorrichtung gemäß einem oder mehreren der obigen Ansprüche, **gekennzeichnet durch** das Vorhandensein eines Aktivkohlefilters, der in eine Umgehungsleitung eingesetzt ist, welche von Elektroventilen gesteuert wird und von der Gebläse-Einlass-Leitung abgezweigt ist.

12. Die Vorrichtung gemäß Anspruch 3 und einem oder mehreren der obigen Ansprüche, **gekennzeichnet durch** das Vorhandensein einer Leitung zum Ansaugen von Außenluft, die von einem Elektroventil gesteuert wird und am Entfeuchter eingesetzt ist.

13. Die Vorrichtung gemäß Anspruch 3 und einem oder mehreren der obigen Ansprüche, **dadurch gekennzeichnet, dass** die Mittel zur Erfassung von Eigenschaften des Stroms Instrumente zur Messung von Temperatur und Feuchtigkeit umfassen, die stromaufwärts vom Entfeuchter an der Ablass-Leitung beziehungsweise der Einlass-Leitung des Gebläses angeordnet sind.

14. Die Vorrichtung gemäß einem oder mehreren der obigen Ansprüche, **dadurch gekennzeichnet, dass** die Mittel zur Erfassung von Eigenschaften des Stroms mindestens einen Sensor für organischen Dampf umfassen, der an der Einlass-Leitung des Gebläses angeordnet ist.

15. Die Vorrichtung gemäß einem oder mehreren der obigen Ansprüche, **dadurch gekennzeichnet, dass** die Mittel zur Erfassung von Eigenschaften des Stroms einen Druckanzeiger umfassen, der an der Einlass-Leitung des Gebläses angeordnet ist.

16. Die Vorrichtung gemäß einem oder mehreren der obigen Ansprüche, **dadurch gekennzeichnet, dass** die Mittel zur Erfassung von Eigenschaften des Stroms einen Durchflussmesser und einen Unterdruckmesser umfassen, die an der Einlass-Leitung des Gebläses angeordnet sind.

17. Die Vorrichtung gemäß Anspruch 16, **gekennzeichnet durch** das Vorhandensein eines Elektroventils für atmosphärische Lüftung, das mit einem Durchflussmesser ausgestattet ist, an der Ablass-Leitung des Gebläses angebracht ist und vom Unterdruckmesser gesteuert wird, um den Unterdruck im Zwischenraum mindestens eines doppelwandigen Behälters einzustellen, und in Kombination mit einem Druckflussregler/elektrischen DrosselVentil arbeitet, das stromabwärts von dem elektrischen Belüftungsventil an der Ablass-Leitung angeordnet ist.

18. Die Vorrichtung gemäß Anspruch 14 und einem oder mehreren der obigen Ansprüche, **gekennzeichnet durch** das Vorhandensein eines Elektroventils, das an der Einlass-Leitung des Gebläses, stromaufwärts vom Sensor für organischen Dampf, angebracht ist und geeignet ist, nur Außenluft in die Leitung eintreten zu lassen, um für die Kalibrierung des Sensors zu sorgen.

19. Die Vorrichtung gemäß einem oder mehreren der obigen Ansprüche, **gekennzeichnet durch** das Vorhandensein einer SPS zum Steuern aller Funktionen.

20. Die Vorrichtung gemäß einem oder mehreren der obigen Ansprüche, **dadurch gekennzeichnet, dass** sie Mittel zur Kommunikation mit entfernten Stationen umfasst, die geeignet sind, erfasste Daten und jede Art von Befehlen zu senden.

## Revendications

1. Dispositif pour traiter des installations de réservoirs (1,2) et de tuyaux enterrés, **caractérisé en ce qu'**il comprend :
une soufflante (15) qui est appropriée pour déterminer un courant de fluide et qui a des conduites d'admission (16) et de distribution (14) comprenant des moyens pour détecter des caractéristiques (18, 18a, 19, 19a, 20, 21, 22, 23) du courant ;
deux collecteurs (12, 13) qui sont raccordés au niveau d'une extrémité, à la conduite de distribution et au niveau de l'autre extrémité à la conduite d'admission de la soufflante au moyen de connecteurs (12c, 13c) prévus avec des électrovannes (12d, 13d) pour contrôler l'écoulement et avoir une pluralité de ramifications (3b - 11b), chacune prévues avec une électrovanne (3c - 11c) pour contrôler l'écoulement et être raccordées à un dispositif de l'utilisateur.

2. Dispositif selon la revendication 1, **caractérisé en ce que** le fluide est de l'air.

3. Dispositif selon la revendication 1, **caractérisé en ce que** le fluide est de l'air déshumidifié, un déshumidificateur (17) étant agencé sur la conduite d'admission de la soufflante.

4. Dispositif selon la revendication 1, **caractérisé en ce que** le fluide est de l'azote.

5. Dispositif selon une ou plusieurs des revendications précédentes, **caractérisé en ce que** les ramifications des collecteurs sont raccordées aux dispositifs de l'utilisateur au moyen de tuyaux flexibles.

6. Dispositif selon la revendication 5, **caractérisé en ce que** chaque dispositif d'utilisateur comprend une sonde perforée qui est entraînée dans le sol.

7. Dispositif selon la revendication 5 ou 6, **caractérisé en ce que** chaque dispositif d'utilisateur comprend l'interstice d'un réservoir à double paroi.

8. Dispositif selon les revendications 5 à 7, **caractérisé en ce que** les dispositifs d'utilisateur comprennent des sondes perforées entraînées dans le sol et comprennent partiellement des interstices des réservoirs à double paroi.

9. Dispositif selon une ou plusieurs des revendications précédentes, **caractérisé en ce qu'**une sonde entraînée dans le sol comprend un corps tubulaire monolithique avec une paroi perforée, prévu à une extrémité avec un raccord d'un tuyau de transport d'air.

10. Dispositif selon une ou plusieurs des revendications précédentes, **caractérisé en ce qu'**une sonde entraînée dans le sol comprend deux corps tubulaires qui ont, à une extrémité, un raccord à un même tuyau de transport d'air, l'un desdits corps étant perforé sur toute sa longueur et comportant, au niveau du raccord, une vanne à une voie qui est ouverte dans la condition dans laquelle l'air sort de la sonde, alors que l'autre corps n'est perforé qu'au niveau de l'extrémité qui est opposée au raccord et n'a pas de vanne.

11. Dispositif selon une ou plusieurs des revendications précédentes, **caractérisé par** la présence d'un filtre au charbon actif inséré sur une conduite de dérivation commandée par des électrovannes et bifurqué à partir de la conduite d'admission de soufflante.

12. Dispositif selon la revendication 3 et une ou plusieurs des revendications précédentes, **caractérisé par** la présence d'une conduite pour aspirer l'air externe qui est contrôlée par une électrovanne et est insérée au niveau du déshumidificateur.

13. Dispositif selon la revendication 2 et une ou plusieurs des revendications précédentes, **caractérisé en ce que** les moyens pour détecter des caractéristiques du courant comprennent des instruments pour mesurer la température et l'humidité, qui sont agencés respectivement sur la conduite de distribution et sur la conduite d'admission de la soufflante en amont du déshumidificateur.

14. Dispositif selon une ou plusieurs des revendications précédentes, **caractérisé en ce que** les moyens pour détecter des caractéristiques du courant comprennent au moins un capteur de vapeur organique qui est agencé sur la conduite d'admission de la soufflante.

15. Dispositif selon une ou plusieurs des revendications précédentes, **caractérisé en ce que** les moyens pour détecter des caractéristiques du courant comprennent une jauge de pression qui est agencée sur la conduite d'admission de la soufflante.

16. Dispositif selon une ou plusieurs des revendications précédentes, **caractérisé en ce que** les moyens pour détecter des caractéristiques du courant comprennent un débitmètre et une jauge de vide agencés sur la conduite d'admission de la soufflante.

17. Dispositif selon la revendication 16, **caractérisé par** la présence d'une électrovanne pour l'échappement à l'atmosphère, qui est prévue avec un débitmètre, est agencée sur la conduite de distribution de la soufflante et est commandée par le capteur de vide afin d'ajuster la pression négative à l'intérieur de l'interstice d'au moins un réservoir à double paroi et agissant en combinaison avec une électrovanne de commande / étranglement de débit agencée sur ladite conduite de distribution en aval de ladite électrovanne d'échappement.

18. Dispositif selon la revendication 14 et une ou plusieurs des revendications précédentes, **caractérisé par** la présence d'une électrovanne agencée sur la conduite d'admission de la soufflante en amont du capteur de vapeur organique et appropriée pour ne permettre qu'à l'air extérieur d'avoir accès à ladite conduite afin de réaliser l'ételonnage dudit capteur.

19. Dispositif selon une ou plusieurs des revendications précédentes, **caractérisé par** la présence d'une PLC pour commander toutes les fonctions.

20. Dispositif selon une ou plusieurs des revendications précédentes, **caractérisé en ce qu'**il comprend des moyens pour communiquer avec des stations à distance qui sont appropriées pour transmettre des données détectées et l'une quelconque des commandes.
